# EUROPEAN PATENT APPLICATION

(11) **EP 4 850 991 A1**
(43) Date of publication of application: **09.12.2026**
(21) Application number: 25840053.0
(22) Date of filing: 16.06.2025
(51) Int. Cl.: B60R 25/24, B60R 25/04, B60K 28/02, B60R 25/40, H02J 50/90

(54) **VEHICLE CONTROL METHOD, DEVICE, MEDIUM, AND PRODUCT**

(30) Priority: 18.07.2024 CN 202410968185
(71) Applicant: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: WANG, Cui, Ningbo, Zhejiang 315336 (CN); LIU, Kun, Ningbo, Zhejiang 315336 (CN); HAN, Yong, Ningbo, Zhejiang 315336 (CN); GUO, Zhengzi, Ningbo, Zhejiang 315336 (CN); FU, Zhaohui, Ningbo, Zhejiang 315336 (CN)
(74) Representative: Boult Wade Tennant LLP
(86) International application number: PCT/CN2025/101245
(87) International publication number: WO 2026/016702

(57) **Abstract**

A vehicle control method, including: performing, in response to detecting a smart key in a sensing region, key verification on the smart key; starting, upon successful key verification, timing; controlling, upon monitoring a driver presence and acquiring a vehicle start instruction within a set valid duration of the successful key verification, the vehicle to start. The method enables a vehicle startup without the need to keep the smart key continuously placed in the sensing region. In this way, if the user also has a wireless charging demand at the same time, the device to be charged can be placed in this sensing region and subjected to wireless charging after the smart key is detected in the sensing region, reducing waiting time and satisfying the demand for simultaneously initiating vehicle startup and wireless charging. A device, a medium, and a product for implementing the vehicle control method are also provided.

## Description

This application claims priority to Chinese Patent Application No. 202410968185.9, filed with the China National Intellectual Property Administration on July 18, 2024, and entitled "VEHICLE CONTROL METHOD, DEVICE, MEDIUM, AND PRODUCT", which is hereby incorporated by reference in its entirety.

### TECHNICAL FIELD

Embodiments of the present application relate to, but are not limited to, the electronic and electrical appliance field, and more particularly, to a vehicle control method, a device, a medium, and a product.

### BACKGROUND

With the rapid development of the automotive industry and peripheral industries such as electronic and electrical appliance technology, vehicles are becoming increasingly electrified, and users are placing ever higher demands on vehicle intelligence. As specific implementations of intelligence, some vehicles are equipped with smart keys, some vehicles integrate wireless charging functionality, and some vehicles are equipped with smart keys as well as integrate wireless charging functionality, and the like.

Currently, for vehicles equipped with smart keys and integrated with wireless charging functionality, the sensing region of the smart key coincides with the sensing region for wireless charging. To start the vehicle, the user is required to first place the smart key on the sensing region, and cannot remove the smart key therefrom until the vehicle has been started. In this way, if the user also has a wireless charging demand at the same time, the user has to wait until the vehicle is started before placing a device to be charged on the sensing region for wireless charging, resulting in a long waiting time.

### SUMMARY

The following provides a summary of the subject matter described in detail herein. This summary is not intended to limit the scope of protection of the claims.

The present application aims to provide a vehicle control method, a device, a medium, and a product, to achieve the effect of reducing waiting time.

In a first aspect, embodiments of the present application provide a vehicle control method, including:
performing, in response to detecting a smart key in a sensing region, key verification on the smart key;
starting, upon successful key verification, timing;
controlling, upon monitoring a driver presence and acquiring a vehicle start instruction within a set valid duration of the successful key verification, the vehicle to start.

In a possible implementation, the vehicle control method may further include: controlling, during a process of responding to detection of the smart key and upon detecting a charging demand for a target device in the sensing region, wireless charging for the target device.

In a possible implementation, monitoring a driver state includes: controlling a monitoring device to monitor the driver state, and the monitoring device includes a driver occupancy sensor and/or a driver monitoring camera device.

In a possible implementation, the controlling the monitoring device to monitor the driver state includes: controlling activation of the monitoring device, to monitor the driver state via the monitoring device.

In a possible implementation, the vehicle control method may further include: waking up, upon detecting a vehicle door opening, the monitoring device.

In a possible implementation, the monitoring device includes the driver occupancy sensor and the driver monitoring camera device, and the method further includes: acquiring, if both the driver occupancy sensor and the driver monitoring camera device operate normally, the driver state monitored by the driver monitoring camera device; acquiring, if the driver monitoring camera device is abnormal, the driver state monitored by the driver occupancy sensor.

In a possible implementation, the vehicle control method may further include: outputting, upon failed key verification, first prompt information for indicating the failed key verification; and/or upon monitoring driver departure within the set valid duration of the successful key verification, invalidating current timing and outputting second prompt information for indicating the driver departure.

In a possible implementation, the vehicle control method may further include: terminating, if the timing exceeds the set valid duration of the successful key verification or the vehicle start instruction is acquired, the timing; upon detecting a smart key in the sensing region during the timing, terminating the timing and performing key verification on the newly detected smart key.

In a possible implementation, the smart key includes an NFC card key, the vehicle is provided with a wireless charging module, the wireless charging module contains an NFC card reader, and the wireless charging module detects the NFC card key in the sensing region via the NFC card reader.

In a second aspect, embodiments of the present application provide a vehicle control apparatus, including:
a response module, configured to perform, in response to detecting a smart key in a sensing region, key verification on the smart key;
a monitoring and timing module, configured to start, upon a successful key verification, timing;
a start module, configured to control, upon monitoring a driver presence and acquiring a vehicle start instruction within a set valid duration of the successful key verification, the vehicle to start.

In a possible implementation, it further includes a charging module, configured to control, during a process of responding to detection of the smart key and upon detecting a charging demand for a target device in the sensing region, wireless charging for the target device.

In a possible implementation, the monitoring and timing module is specifically configured to: control a monitoring device to monitor a driver state, where the monitoring device includes a driver occupancy sensor and/or a driver monitoring camera device.

In a possible implementation, the monitoring and timing module is further configured to control activation of the monitoring device, to monitor the driver state via the monitoring device.

In a possible implementation, it further includes a wake-up module, configured to wake up, upon detecting a vehicle door opening, the monitoring device.

In a possible implementation, the above monitoring device includes the driver occupancy sensor and the driver monitoring camera device, and the vehicle control apparatus further includes an acquisition module, which is configured to:
acquire, when both the driver occupancy sensor and the driver monitoring camera device operate normally, the driver state monitored by the driver monitoring camera device;
acquire, when the driver monitoring camera device is abnormal, the driver state monitored by the driver occupancy sensor.

In a possible implementation, the vehicle control device further includes an output module, configured to output, upon failed key verification, first prompt information for indicating the failed key verification; and/or, upon monitoring driver departure within the set valid duration of the successful key verification, invalidate current timing and output second prompt information for indicating the driver departure.

In a possible implementation, the monitoring and timing module is further configured to: terminate, if the timing exceeds the set valid duration of the successful key verification or the vehicle start instruction is acquired, the timing; upon detecting a smart key in the sensing region during the timing, terminate the timing and trigger the response module to perform key verification on the newly detected smart key.

In a possible implementation, the above smart key includes an NFC card key, the vehicle is provided with a wireless charging module, the wireless charging module contains an NFC card reader, and the wireless charging module detects the NFC card key in the sensing region via the NFC card reader.

In a third aspect, embodiments of the present application provide an electronic device, including: a memory, and a processor;
where the memory stores computer-executable instructions;
the processor executes the computer-executable instructions stored in the memory, causing the processor to perform the above first aspect and/or various possible implementations of the first aspect.

In a fourth aspect, embodiments of the present application provide a computer-readable storage medium, where computer-executable instructions are stored in the computer-readable storage medium, and the computer-executable instructions, when executed, are configured to implement the above first aspect and/or various possible implementations of the first aspect.

In a fifth aspect, embodiments of the present application provide a computer program product, including a computer program, where the computer program, when executed, implements the above first aspect and/or various possible implementations of the first aspect.

In a sixth aspect, the present application provides a computer program, where when the computer program is executed on a computer, the computer performs the method as described in the first aspect.

In the vehicle control method, device, medium, and product provided by the present application, by performing, in response to detecting a smart key in a sensing region, key verification on the smart key; starting, upon successful key verification, timing; controlling, upon monitoring a driver presence and acquiring a vehicle start instruction within a set valid duration of the successful key verification, the vehicle to start; the smart key does not need to be placed in the sensing region all the time to start the vehicle. In this way, if the user also has a wireless charging demand at the same time, the device to be charged can be placed in this sensing region and subjected to wireless charging after the smart key is detected in the sensing region, reducing waiting time and satisfying the demand for simultaneously initiating vehicle startup and wireless charging.

Further aspects may be understood after reading and understanding the drawings and the detailed description.

### BRIEF DESCRIPTION OF DRAWINGS

The drawings herein are incorporated into and constitute a part of this specification, illustrate embodiments consistent with the present application, and together with the specification, serve to explain the principles of the present application.
FIG. 1 is a structural composition diagram of a vehicle-mounted system involved in a vehicle control method provided by an embodiment of the present application.
FIG. 2 is an interaction schematic diagram among different structures in a vehicle-mounted system involved in a vehicle control method provided by an embodiment of the present application.
FIG. 3 is a first schematic flowchart of a vehicle control method provided by the present application.
FIG. 4 is a second method flowchart of a vehicle control method provided by an embodiment of the present application.
FIG. 5 is a schematic structural diagram of a vehicle control apparatus provided by an embodiment of the present application.
FIG. 6 is a schematic structural diagram of an electronic device provided by an embodiment of the present application.

Through the above drawings, specific embodiments of the present application have been shown, and will be described in more detail hereinafter. These drawings and textual descriptions are not intended to limit the scope of the concept of the present application in any way, but rather to explain the concept of the present application to those skilled in the art by referring to specific embodiments.

The drawings are provided to facilitate further understanding of the technical solutions of the present application, constitute a part of the specification, and together with the embodiments of the present application, serve to explain the technical solutions of the present application, without imposing any limitation on the technical solutions of the present application.

### DESCRIPTION OF EMBODIMENTS

In order to make the objectives, technical solutions, and advantages of the present application clearer, the present application will be described in further detail below with reference to the drawings and embodiments. It should be understood that the specific embodiments described herein are merely used for illustrating the present application and are not intended to limit the present application.

Exemplary embodiments will be described in detail herein, with examples of which illustrated in the drawings. When the following description refers to the drawings, unless otherwise indicated, the same numbers in different drawings denote identical or similar elements. The implementations described in the following exemplary embodiments do not represent all implementations consistent with the present application. Instead, they are merely examples of apparatuses and methods consistent with some aspects of the present application as recited in the appended claims.

It should be noted that the user information (including but not limited to user device information, user personal information, etc.) and data (including but not limited to data for analysis, stored data, displayed data, etc.) involved in the present application are all information and data that have been authorized by the user or fully authorized by all parties, and the collection, use, manipulation, transmission, provision, disclosure, application, and other processing of relevant data all comply with relevant laws, regulations, and standards. Necessary confidentiality measures are adopted, public order and good morals are not violated, and corresponding operation interfaces are provided for users to choose authorization or refusal.

Moreover, in the technical solutions of the present application that involve conducting big data analysis on user information (including but not limited to personal biological features, identity data, consumption data, asset data, electronic terminal operation data, etc.), employing artificial intelligence technology for automated decision-making, and making decisions that significantly affect personal rights and interests based on results of the automated decision-making, corresponding operation interfaces are provided for users to agree to or refuse the results of automated decision-making; if the user chooses to refuse, an expert decision-making procedure is initiated.

It should be noted that the vehicle control method, device, medium, and product of the present application may be applied to the electronic and electrical appliance field or other vehicle-related fields.

It should be noted that, as used herein, the terms "include", "comprise", or any other variation thereof are intended to cover non-exclusive inclusion, such that a process, method, article, or device including a series of elements includes not only those elements but also other elements not expressly listed, or further includes elements inherent to such process, method, article, or device. Absent further limitations, an element defined by the wording "include one ..." does not exclude the existence of additional identical elements in the process, method, article, or device including such element.

Currently, a sensing region for a near field communication (Near Field Communication, abbreviated as NFC) card key coincides with a sensing region for wireless charging of mobile terminals such as mobile phones. When a user is starting a vehicle and simultaneously needs to charge a mobile phone, multiple steps are required to support mobile phone charging, resulting in a poor user experience. Therefore, in order to improve user experience and simultaneously meet the user's needs for both vehicle startup and mobile phone charging, the present application optimizes the vehicle startup and proposes a vehicle control method. A smart key such as an NFC card key only needs to be placed in the sensing region for one-time sensing, and within a set duration, the vehicle startup, shifting to D gear, and vehicle power output are supported, without the need to keep the smart key continuously attached to the sensing region.

The set duration may be set differently according to specific vehicles, specifically set according to a verification duration of the smart key and a duration for the user to respond and input a vehicle start instruction. Exemplarily, the set duration may be 60 seconds.

Based on the above, after the smart key is placed in the sensing region for one-time sensing, the user may place the mobile phone in the sensing region for mobile phone charging, which can satisfy the user's demand for charging a device while starting the vehicle, and the operation steps are concise and straightforward, greatly improving the user experience.

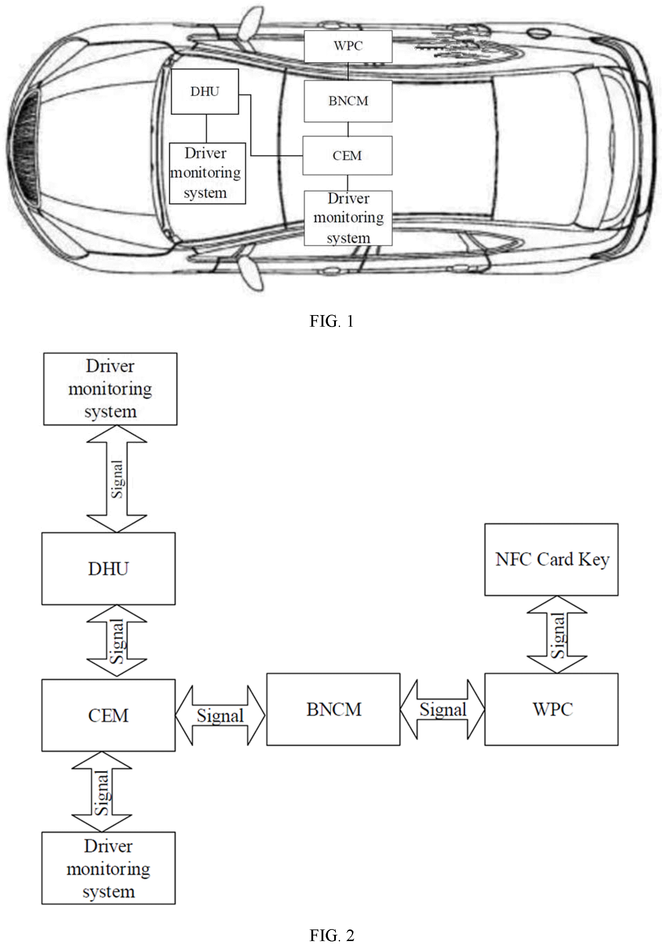

Prior to describing the vehicle control method provided by the embodiments of the present application, a structural composition of a vehicle-mounted system involved in the vehicle control method and interaction process among different structures in the vehicle-mounted system will first be explained with reference to the figures, where FIG. 1 is a structural composition diagram of a vehicle-mounted system involved in a vehicle control method provided by an embodiment of the present application.

As shown in FIG. 1, it can be seen that the vehicle-mounted system involved in the vehicle control method mainly includes a driver monitoring system, a digital cockpit head unit (Digital Cockpit Head Unit, abbreviated as DHU), a central electronic module (Central Electronic Module, abbreviated as CEM), a vehicle body controller, a Bluetooth near field communication module (Bluetooth Near Field Communication Module, abbreviated as BNCM), a wireless phone charge (Wireless Phone Charge, abbreviated as WPC) module, and other modules. The driver monitoring system includes a monitoring device and a control module, and the monitoring device includes a driver monitoring camera device (Driver Monitoring Camera, abbreviated as DMC) and a driver occupancy sensor; the DHU includes a central control screen; the vehicle body controller is a part of the CEM.

FIG. 2 is an interaction schematic diagram among different structures in a vehicle-mounted system involved in a vehicle control method provided by an embodiment of the present application. As shown in FIG. 2, in the structure shown in FIG. 1, the DHU is respectively connected to the driver monitoring system and the CEM, the CEM is also connected to the driver monitoring system and the BNCM, and the BNCM is further connected to the WPC module, and the interconnected components are capable of communicating with one other, e.g., signal transmission and the like. The monitoring device in the driver monitoring system can be configured to monitor a driver state. All the monitoring devices are connected to the CEM, and can synchronize the respectively acquired driver states to the CEM, where the driver state acquired by the driver monitoring system may be transmitted to the CEM via the DHU, or may be directly displayed on the central control screen of the DHU. The WPC module is integrated with a sensing function. When a mobile terminal is sensed, the WPC module transmits relevant information to the CEM via the BNCM, so as to charge the mobile terminal using wireless charging technology. The BNCM and the CEM are part of a remote control subsystem (Remote control), and the CEM controls an electrical appliance system of the vehicle body based on the acquired driver state and other information, for example, controlling electric windows, electric rearview mirrors, air conditioning, an anti-theft locking system, and the like.

Optionally, for the case where the sensing region of the smart key and the sensing region for wireless charging are the same region, the WPC module may contain an NKR module, for example, an NFC card reader.

The technical solutions of the present application are described in detail below with specific embodiments. The following specific embodiments may be combined with each other, and the same or similar concepts or processes may not be repeated in some embodiments. The embodiments of the present application are described below with reference to the drawings.

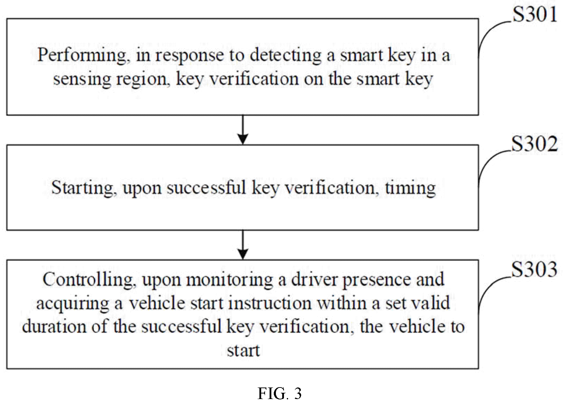

FIG. 3 is a first schematic flowchart of a vehicle control method provided by the present application. An embodiment of the present application provides a vehicle control method, which can be executed, for example, through cooperation of various structures in the vehicle-mounted system shown in FIG. 1. As shown in FIG. 3, the method includes the following.

S301, performing, in response to detecting a smart key in a sensing region, key verification on the smart key.

Exemplarily, the NFC card reader in the WPC module senses an NFC card key, i.e., the smart key, and in response to such action, the WPC module reads relevant information of the smart key via the NFC card reader, and interacts with the BNCM based on the read relevant information, so that the BNCM compares the relevant information with stored vehicle key information to perform key verification on the smart key.

The implementation of key verification may refer to existing technologies, which will not be repeated herein.

S302, starting, upon successful key verification, timing.

In this step, it can be understood that if the result of key verification performed on the smart key in S301 is a successful key verification, the BNCM transmits a signal indicating successful key verification to the control module of the driver monitoring system. The control module of the driver monitoring system controls the activation of monitoring device, so that the monitoring device of the driver monitoring system starts monitoring the driver state. The control module of the driver monitoring system also transmits a signal indicating whether the control for activating the monitoring device is successful to the BNCM. After receiving the signal indicating the control for activating the monitoring device is successful, the BNCM starts timing.

S303, controlling, upon monitoring a driver presence and acquiring a vehicle start instruction within a set valid duration of the successful key verification, the vehicle to start.

In this step, it can be understood that within the set valid duration of the successful key verification, if the driver does not leave the driver's seat and triggers a start request, where the start request is triggered by pressing a start button or turning a start knob within the vehicle, the start request issued by the driver is transmitted to the CEM. The CEM performs start verification on the start request, where the contents of start verification include checking whether the safety belt is fastened, whether vehicle doors are fully closed, and the like. Once the verification is passed, the CEM transmits start authorization information to the vehicle body controller, and upon receiving the start authorization information, the vehicle body controller activates a start relay, thereby delivering electric energy to a starter motor. Powered by electricity, the starter motor starts to rotate and drives an engine to operate, thereby completing the vehicle starting process.

In the embodiments of the present application, key verification is performed on the smart key detected in the sensing region. Within the set valid duration of the successful key verification, if it is monitored that the driver has not left and the vehicle start instruction issued by the driver is acquired, the vehicle is then controlled to start. By setting the valid duration of the successful key verification, the driver is enabled to complete vehicle starting without continuously placing the smart key in the sensing region within the set valid duration of the successful key verification. The operation procedures are concise and straightforward, which greatly improves the user experience. Optionally, if the user also has a demand for wireless charging at the same time, a device to be charged may be placed in the sensing region after the smart key is detected therein to perform wireless charging on the device to be charged, which reduces waiting time and satisfies the requirement of simultaneously performing vehicle starting and wireless charging.

On the basis of the above embodiments, the vehicle control method may further include: controlling, during a process of responding to detection of the smart key and upon detecting a charging demand for a target device in the sensing region, wireless charging for the target device.

In this embodiment, it can be understood that during the process of responding to detection of the smart key in the sensing region of the WPC module, if the WPC module also detects that the target device has a charging demand in the sensing region, the WPC module performs a wireless charging operation on the target device using wireless charging technology. In this process, the target device may be a mobile phone. Where, the process of responding to detection of the smart key in the sensing region of the WPC module includes: within the set valid duration of the successful key verification.

Optionally, performing the wireless charging operation on the target device requires that the car mode (Car Mode) be set to a normal mode (normal) or a crash mode (crash). Optionally, performing the wireless charging operation on the target device also requires that all logics in the usage mode (Usage Mode) of the vehicle, including convenience (convenience), inactive state (inactive), and active state (active), be available for use.

In the embodiments of the present application, during the process of responding to detection of the smart key, if the charging demand for the target device is detected in the sensing region, the wireless charging module is controlled to perform wireless charging on the target device, which can satisfy the user's demand for charging the device while starting the vehicle.

On the basis of the above embodiments, the monitoring the driver state as described in S102 includes: controlling a monitoring device to monitor the driver state, and the monitoring device includes a driver occupancy sensor and/or a DMC. The controlling the monitoring device to monitor the driver state includes: controlling activation of the monitoring device, to monitor the driver state via the monitoring device.

In this embodiment, it can be understood that after the successful key verification, the BNCM transmits the signal indicating successful key verification to the control module of the driver monitoring system. Upon receiving the signal indicating successful key verification, the control module of the driver monitoring system controls activation of the monitoring device, so that the monitoring device of the driver monitoring system starts monitoring the driver state. The monitoring device of the driver monitoring system includes the driver occupancy sensor and/or the DMC.

In one example, the driver occupancy sensor is controlled to be activated, to monitor the driver state via the driver occupancy sensor.

In another example, the driver occupancy sensor and the DMC are controlled to be activated, to monitor the driver state via the driver occupancy sensor and the DMC.

Optionally, before controlling activation of the monitoring device to monitor the driver state via the monitoring device, it further includes: waking up, upon detecting a vehicle door opening, the monitoring device. This means that before controlling activation of the monitoring device, the monitoring device needs to be woken up first, and opening the vehicle door is a prerequisite for waking up the monitoring device.

Specifically, when the user brings the smart key close to a designated position for unlocking the vehicle, the NFC reader at the designated position for unlocking the vehicle is activated. The activated NFC reader captures a signal emitted by the smart key and transmits the captured signal to the CEM, which verifies identity information of the smart key. Upon successful verification, the CEM transmits a signal for unlocking the vehicle door to the vehicle body controller. After receiving the signal for unlocking the vehicle door, the vehicle body controller controls a door lock actuator to complete a vehicle door unlocking operation. After the vehicle door unlocking operation is completed, the user can open the door. When the door is opened, the state of the door lock switch sensor changes, and the door lock switch sensor transmits the changed state to the control module of the driver monitoring system. Upon receiving the state signal transmitted by the door lock switch sensor, the control module of the driver monitoring system sets the monitoring device to a wake-up state.

In the embodiments of the present application, the monitoring device is adopted to monitor the driver state, which can improve the accuracy of the vehicle control method in determining the driver state.

On the basis of the above embodiments, the above monitoring device includes the driver occupancy sensor and the DMC. The above method further includes: if both the driver occupancy sensor and the DMC operate normally, acquiring the driver state monitored by the DMC; if the DMC is abnormal, acquiring the driver state monitored by the driver occupancy sensor.

In this embodiment, it can be understood that if the monitoring device includes the DMC and the driver occupancy sensor, and the driver state monitored by the DMC is inconsistent with the driver state monitored by the driver occupancy sensor, the driver state monitored by the DMC is taken as the driver state.

This means that if the driver monitoring system of the vehicle is equipped with both a DMC and a driver occupancy sensor, the control module of the driver monitoring system simultaneously transmits driver state signals monitored by the DMC and the driver occupancy sensor, and at this time, the driver state signal transmitted by the DMC is preferentially adopted. In the event of a judgment conflict between the two driver state signals, the driver state signal transmitted by the DMC shall prevail. For example, the driver occupancy sensor sends that the driver's seat is unoccupied, while the DMC sends that the driver's seat is occupied, resulting in a conflict between the two driver state signals, the driver state signal transmitted by the DMC shall be adopted to continue the downstream functional logics and design procedures.

In the embodiments of the present application, two monitoring devices are adopted to monitor the driver state, which can the accuracy of determining the driver state.

On the basis of the above embodiments, upon failed key verification, first prompt information indicating the failed key verification is output; and/or, upon monitoring driver departure within the set valid duration of the successful key verification, current timing is invalidated and second prompt information indicating the driver departure is output.

In this embodiment, it can be understood that upon the failed key verification, the BNCM transmits the first prompt information indicating the failed key verification to the DHU, and the DHU processes the received first prompt information indicating the failed key verification transmitted by the BNCM using its central processing unit and then outputs the processed first prompt information on the central control screen, where the first indication information includes a result of the failed key verification and corresponding countermeasures.

Within the set valid duration of the successful key verification, if the driver monitoring system monitors that the driver has left, the control module of the driver monitoring system transmits the second prompt information indicating driver departure to the BNCM and the DHU. After receiving the second prompt information indicating driver departure, the BNCM invalidates the current timing, and after receiving the second prompt information indicating driver departure, the DHU processes the received second prompt information indicating driver departure using its central processing unit and then outputs the processed second prompt information on the central control screen. Where the second indication information includes information of the driver state and corresponding countermeasures.

In the embodiments of the present application, relevant prompt information is output, which can help the user understand the causes of failures occurring when controlling vehicle starting and charging the device, so as to clarify subsequent operations for users, thereby improving user experience.

On the basis of above embodiments, if the timing exceeds the set valid duration of the successful key verification or the vehicle start instruction is acquired, the timing is terminated; upon detecting a smart key in the sensing region during the timing, the timing is terminated, and key verification is performed on the newly detected smart key.

In this embodiment, it can be understood that the timing is terminated under the following circumstances.
1. The BNCM stops the timing logic if the driver fails to start the vehicle within the set valid duration of the successful key verification, that is, when the BNCM does not receive a vehicle start instruction issued by the driver within the set valid duration of the successful key verification, the timing is terminated by the BNCM.
2. The BNCM stops the timing logic when the driver starts the vehicle, that is, when the BNCM receives the vehicle start instruction issued by the driver, the timing is terminated by the BNCM.
3. The BNCM stops the timing logic when a smart key is detected again in the sensing region, that is, when the BNCM receives a signal indicating re-detection of the smart key in the sensing region, the timing is terminated, but key verification is performed again on the newly detected smart key by the BNCM.

Optionally, the smart key includes an NFC card key. The vehicle is provided with a wireless charging module, and the wireless charging module contains an NFC card reader. The wireless charging module detects the NFC card key in the sensing region via the NFC card reader.

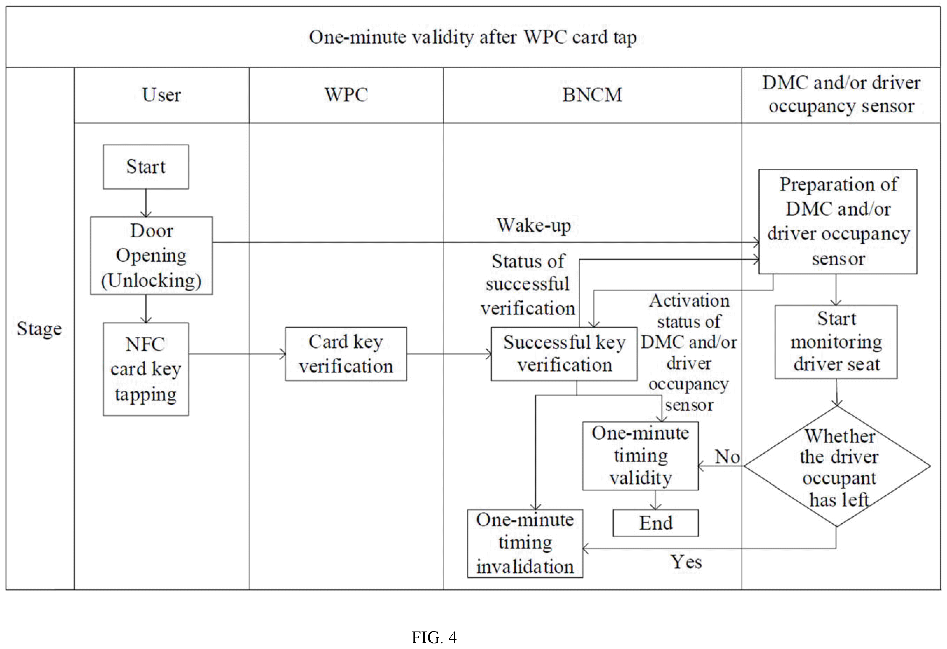

Hereinafter, an explanation is given on how to implement the vehicle control method provided by the embodiments of the present application with a valid duration of one minute as an example. The method flowchart is shown in FIG. 4. FIG. 4 is a second method flowchart of a vehicle control method provided by an embodiment of the present application.

As shown in FIG. 4, the steps of the vehicle control method are as follows.
1. The user unlocks the vehicle and opens the vehicle door to wake up the monitoring device even if the vehicle is not in an abandon (Abandon) state, where the monitoring device includes a driver monitoring camera and/or a driver occupancy sensor.
2. The user places the NFC card key in the sensing region of the WPC module. The WPC module reads relevant information of the smart key via the NFC card reader, and interacts with the BNCM based on the read relevant information, so that the BNCM compares the relevant information with stored vehicle key information to perform key verification on the smart key.
3. Upon failed key verification, the BNCM terminates the one-minute timing logic, and prompts relevant information of the failed key verification on a large feedback screen, that is, prompt relevant information of the failed key verification on the central control screen.
4. Upon successful key verification, the BNCM interacts with the control module of the driver monitoring system by broadcasting the signal indicating the successful key verification. After receiving the key verification information, the control module of the driver monitoring system activates the monitoring device, so that the monitoring device in the driver monitoring system starts monitoring the driver state. The activation state of the monitoring device is transmitted to the BNCM in a form of Controller Area Network (Controller Area Network, abbreviated as CAN) broadcast. After receiving the signal indicating successful activation of the monitoring device, the BNCM starts timing.
5. If the monitoring device in the driver monitoring system monitors that the driver has left, the control module of the driver monitoring system transmits the information indicating driver departure to the BNCM and the DHU via CAN broadcast. After receiving the relevant prompt information indicating driver departure, the BNCM invalidates the current timing. After receiving the relevant prompt information indicating driver departure, the DHU processes the received relevant prompt information indicating driver departure using its central processing unit, and then outputs the processed relevant prompt information on the central control screen.
6. If the monitoring device in the driver monitoring system monitors that the driver has not left, the control module of the driver monitoring system transmits the information indicating the driver presence to the BNCM. After receiving the information indicating the driver presence, the BNCM activates the one-minute valid timing logic. At this time, the user is allowed to start the vehicle within one minute, without the need to place the NFC card key in the WPC sensing region.
7. After the NFC card key is detected once within the WPC sensing region, if a mobile phone signal is further received in the WPC sensing region, the WPC can be used to perform a charging operation on the mobile phone.

In summary, the vehicle control method provided by the embodiments of the present application only requires the NFC card key to be placed on the sensing region for one-time sensing, without the need to keep the NFC card key continuously placed in the sensing region. At the same time, this method can support vehicle startup, shifting to D gear, and vehicle power output within one minute. In other words, in the vehicle control method provided by the embodiments of the present application, after the NFC card key is placed in the sensing region for one-time sensing, the mobile phone may be placed in the sensing region for charging, thereby improving user experience.

Optionally, by monitoring the driver state using the DMC and/or the driver occupancy sensor and activating the timing logic using the BNCM, the embodiments of the present application ensure the validity of key verification and authentication within one minute, and support the user to simultaneously implement the operations of starting the vehicle and charging the mobile phone, greatly improving user experience.

In addition, the vehicle control method provided by the embodiments of the present application does not require additional on-board hardware configurations or external devices (vehicle fault diagnosis tools), and will not cause software faults in the on-board controller, saving vehicle costs.

The following are apparatus embodiments of the present application, which may be adopted to execute the method embodiments of the present application. For details not disclosed in the apparatus embodiments of the present application, please refer to the method embodiments of the present application.

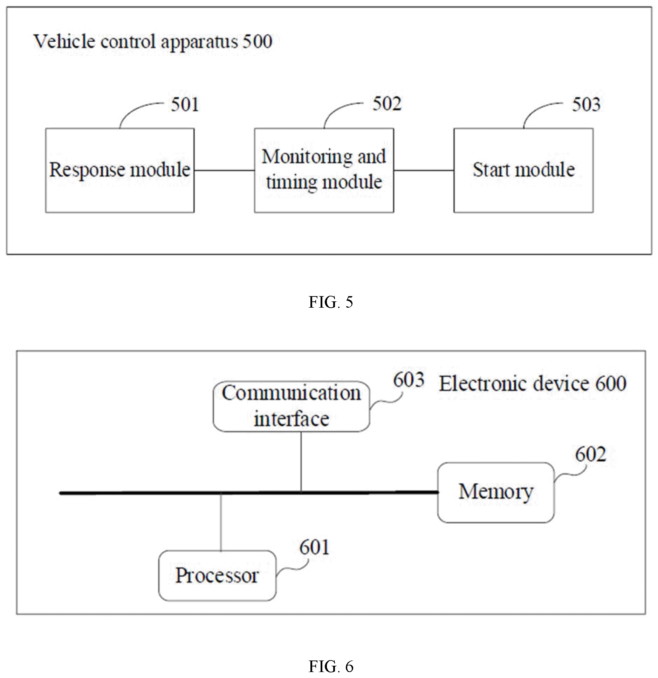

FIG. 5 is a schematic structural diagram of a vehicle control apparatus provided by an embodiment of the present application. As shown in FIG. 5, the vehicle control apparatus 500 includes:
a response module 501, configured to perform, in response to detecting a smart key in a sensing region, key verification on the smart key;
a monitoring and timing module 502, configured to start, upon a successful key verification, timing;
a start module 503, configured to control, upon monitoring a driver presence and acquiring a vehicle start instruction within a set valid duration of the successful key verification, the vehicle to start.

In a possible implementation, it further includes a charging module (not shown), which is configured to control, during a process of responding to detection of the smart key and upon detecting a charging demand for a target device in the sensing region, wireless charging for a target device.

In a possible implementation, the monitoring and timing module 502 is specifically configured to: control a monitoring device to monitor a driver state, where the monitoring device includes a driver occupancy sensor and/or a DMC.

In a possible implementation, the monitoring and timing module 502 is further configured to control activation of the monitoring device, to monitor the driver state via the monitoring device.

In a possible implementation, it further includes a wake-up module (not shown), which is configured to wake up, upon detecting a vehicle door opening, the monitoring device.

In a possible implementation, the above monitoring device includes a driver occupancy sensor and a DMC, and the vehicle control apparatus further includes an acquisition module (not shown), which is configured to: acquire, when both the driver occupancy sensor and the DMC operate normally, the driver state monitored by the DMC; acquire, when the DMC is abnormal, the driver state monitored by the driver occupancy sensor.

In a possible implementation, the vehicle control apparatus further includes an output module (not shown), which is configured to output, upon failed key verification, first prompt information indicating the failed key verification; and/or, upon monitoring driver departure within the set valid duration of the successful key verification, invalidate current timing and output second prompt information indicating the driver departure.

In a possible implementation, the monitoring and timing module 502 is further configured to: if the timing exceeds the set valid duration of the successful key verification or the vehicle start instruction is acquired, terminate the timing; upon detecting a smart key in the sensing region during the timing, terminate the timing and trigger the response module 501 to perform key verification on the newly detected smart key.

In a possible implementation, the above smart key includes an NFC card key, the vehicle is provided with a wireless charging module, the wireless charging module contains an NFC card reader, and the wireless charging module detects the NFC card key in the sensing region via the NFC card reader.

The vehicle control apparatus provided by the embodiments of the present application can execute the technical solutions shown in the above method embodiments, with the implementation principles and beneficial effects thereof being similar, repeated description is omitted herein.

It should be noted that it should be understood that the division of each module of the above apparatus is merely a logical function division. In actual implementation, all or part of the modules may be integrated into one physical entity, or may be physically separated. And these modules may all be implemented in a form of software invoked via a processing element; may all be implemented in a form of hardware; or may be partially implemented in the form of software invoked via the processing element and partially implemented in the form of hardware. For example, the processing module may be implemented as an independently configured processing element, or integrated into a certain chip of the above apparatus for implementation. In addition, the processing module may also be stored in a memory of the above apparatus in a form of program code, and the functions of the above processing module are invoked and executed by a certain processing element of the above apparatus. The implementation of other modules is similar to that of the processing module. Moreover, all or part of these modules may be integrated together, or may be implemented independently. The processing element here may be an integrated circuit having signal processing capability. In the process of implementation, each step of the above methods or each module above may be accomplished by integrated logic circuits in hardware or by instructions in the form of software of the processor element.

By way of example, the above modules may be one or more integrated circuits configured to implement the above methods, for example: one or more application specific integrated circuits (Application Specific Integrated Circuit, abbreviated as ASIC), or one or more microprocessors (Digital Signal Processor, abbreviated as DSP), or one or more field programmable gate arrays (Field Programmable Gate Array, abbreviated as FPGA), etc. As another example, when a certain module above is implemented in a form of a processing element invoking program code, the processing element may be a general-purpose processor, such as a central processing unit (Central Processing Unit, abbreviated as CPU) or other processor capable of invoking program code. For another example, these modules may be integrated together and implemented in a form of a system-on-a-chip (System-On-a-Chip, abbreviated as SOC).

FIG. 6 is a schematic structural diagram of an electronic device provided by an embodiment of the present application. As shown in FIG. 6, the electronic device 600 provided by an embodiment of the present application may include: a processor 601, and a memory 602 communicatively connected to the processor, where:
the memory stores computer-executable instructions;
the processor executes the computer-executable instructions stored in the memory to implement the vehicle control method as described in the foregoing method embodiments.

It should be understood that the processor 601 may be a central processing unit (Central Processing Unit, abbreviated as CPU), and may also be other general-purpose processors, a digital signal processor (Digital Signal Processor, abbreviated as DSP), an application specific integrated circuit (Application Specific Integrated Circuit, abbreviated as ASIC), and the like. A general-purpose processor may be a microprocessor, or the processor may also be any conventional processor, and the like. The steps of the methods disclosed in conjunction with the application may be directly implemented as being executed by a hardware processor, or executed by a combination of hardware and software modules of the processor. The memory 602 may include high-speed random access memory (Random Access Memory, abbreviated as RAM), may also include non-volatile memory (non-volatile memory, NVM), such as at least one disk storage device, and may also be a USB flash drive, a portable hard disk, a read-only memory, a magnetic disk, or an optical disc, and the like.

Optionally, the electronic device 600 may further include a communication interface 603. In specific implementation, if the communication interface 603, the memory 602, and the processor 601 are implemented independently, the communication interface 603, the memory 602, and the processor 601 may be connected to each other via a bus to perform mutual communication. The bus may be an industry standard architecture (Industry Standard Architecture, abbreviated as ISA) bus, a peripheral component interconnect (Peripheral Component, abbreviated as PCI) bus, or an extended industry standard architecture (Extended Industry Standard Architecture, abbreviated as EISA) bus, and the like. The bus may be classified into an address bus, a data bus, a control bus, and the like, but this does not mean that only one bus or only one type of bus is provided.

Optionally, in specific implementation, if the communication interface 603, the memory 602, and the processor 601 are integrated on one chip for implementation, communication among the communication interface 603, the memory 602, and the processor 601 may be accomplished via internal interfaces.

Embodiments of the present application also provide a computer-readable storage medium, where computer-executable instructions are stored therein, and the computer-executable instructions, when executed, are configured to implement the vehicle control method described in any one of the foregoing embodiments.

It can be understood that the computer-readable storage medium may be implemented by any type of volatile storage device or non-volatile storage device or a combination thereof, for example, a static random access memory (Static Random Access Memory, abbreviated as SRAM), an electrically erasable programmable read only memory (Electrically Erasable Programmable Read Only Memory, abbreviated as EEPROM), an erasable programmable read only memory (Erasable Programmable Read Only Memory, abbreviated as EPROM), a programmable read only memory (Programmable Read Only Memory, abbreviated as PROM), a read only memory (Read Only Memory, abbreviated as ROM), a disk storage device, a flash memory, a magnetic disk, or an optical disc. The readable storage medium may be any available medium accessible to a general-purpose computer or a special-purpose computer.

An exemplary computer-readable storage medium is coupled to the processor, so that the processor can read information from the computer-readable storage medium and can write information to the computer-readable storage medium. Naturally, the computer-readable storage medium may also be an integral part of the processor. The processor and the computer-readable storage medium may be located in the ASIC. Of course, the processor and the computer-readable storage medium may also exist as discrete components in the electronic device.

The integrated modules implemented in the form of software functional modules as described above may be stored in a computer-readable storage medium. The above software functional modules stored in a computer-readable storage medium, include several instructions for causing an electronic device (which may be a personal computer, a server, a network device, or the like) or a processor to execute part of the steps of the methods described in the various embodiments of the present application.

Embodiments of the present application also provide a computer program product, including a computer program, where the computer program, when executed, implements the vehicle control method described in any one of the foregoing embodiments.

Embodiments of the present application also provide a computer program, where the computer program, when executed on a computer, causes the computer to execute the method steps in the above method embodiments. The specific implementations and technical effects are similar, which will not be repeated herein.

It should be noted that, for the sake of simple description, the foregoing method embodiments are all described as a combination of a series of actions. However, those skilled in the art should know that the present application is not limited to the described sequence of the actions, as certain steps may be performed in other sequences or simultaneously in accordance with the present application. In addition, those skilled in the art should also know that the embodiments described in the specification are all optional embodiments, and the actions and modules involved are not necessarily essential to the present application.

It should be further noted that although the various steps in the flowchart are shown in sequence in accordance with the directions indicated by arrows, these steps are not necessarily executed in the sequence indicated by the arrows. Unless explicitly specified herein, the execution of these steps is not strictly limited to the sequence, and these steps may be executed in other sequences. Moreover, at least part of the steps in the flowchart may include a plurality of sub-steps or stages, and these sub-steps or stages are not necessarily executed simultaneously, but may be executed at different time points, and the execution sequence of these sub-steps or stages is not necessarily sequential, but may be executed in turn or alternately with at least part of other steps or sub-steps or stages of other steps.

In the above embodiments, each embodiment is described with different emphases, and for parts not detailed in a certain embodiment, reference may be made to the relevant descriptions of other embodiments. All technical features of the above embodiments may be combined arbitrarily. For the sake of concise description, not all possible combinations of the technical features in the above embodiments are described. However, any combination of such technical features that contains no contradictions shall be deemed to fall within the scope disclosed by the present specification.

Other implementations of the present application will readily apparent to those skilled in the art upon consideration of the specification and practice of the invention disclosed herein. The present application is intended to cover any variations, uses, or adaptive changes of the present application, which follow the general principles of the present application and encompass common general knowledge or conventional technical means in the art that are not disclosed by the present application. The specification and embodiments are merely considered exemplary, and the true scope and spirit of the present application are indicated by the appended claims.

It should be understood that the present application is not limited to the precise structures described above and illustrated in the drawings, and various modifications and changes may be made without departing from the scope thereof. The scope of the present application is limited only by the appended claims.

The foregoing provides a detailed description of preferred embodiments of the present application, but the present application is not limited to the embodiments. Those skilled in the art may make various equivalent modifications or substitutions without departing from the spirit of the present application, and these equivalent modifications or substitutions are all included within the scope defined by the claims of the present application.

## Claims

1. A vehicle control method, **characterized by** comprising:
performing, in response to detecting a smart key in a sensing region, key verification on the smart key;
starting, upon successful key verification, timing;
controlling, upon monitoring a driver presence and acquiring a vehicle start instruction within a set valid duration of the successful key verification, the vehicle to start.

2. The method according to claim 1, further comprising:
controlling, during a process of responding to detection of the smart key and upon detecting a charging demand for a target device in the sensing region, wireless charging for the target device.

3. The method according to claim 1 or 2, wherein monitoring a driver state comprises:
controlling a monitoring device to monitor the driver state, and the monitoring device comprises a driver occupancy sensor and/or a driver monitoring camera device.

4. The method according to claim 3, wherein the controlling the monitoring device to monitor the driver state comprises:
controlling activation of the monitoring device, to monitor the driver state via the monitoring device.

5. The method according to claim 4, further comprising:
waking up, upon detecting a vehicle door opening, the monitoring device.

6. The method according to claim 3, wherein the monitoring device comprises the driver occupancy sensor and the driver monitoring camera device, and the method further comprises:
acquiring, if both the driver occupancy sensor and the driver monitoring camera device operate normally, the driver state monitored by the driver monitoring camera device;
acquiring, if the driver monitoring camera device is abnormal, the driver state monitored by the driver occupancy sensor.

7. The method according to claim 1 or 2, further comprising:
outputting, upon failed key verification, first prompt information for indicating the failed key verification; and/or
upon monitoring driver departure within the set valid duration of the successful key verification, invalidating current timing and outputting second prompt information for indicating the driver departure.

8. The method according to claim 1 or 2, further comprising:
terminating, if the timing exceeds the set valid duration of the successful key verification or the vehicle start instruction is acquired, the timing;
upon detecting a smart key in the sensing region during the timing, terminating the timing and performing key verification on the newly detected smart key.

9. The method according to claim 1 or 2, wherein the smart key comprises an NFC card key, the vehicle is provided with a wireless charging module, the wireless charging module contains an NFC card reader, and the wireless charging module detects the NFC card key in the sensing region via the NFC card reader.

10. A vehicle control apparatus, **characterized by** comprising:
a response module, configured to perform, in response to detecting a smart key in a sensing region, key verification on the smart key;
a monitoring and timing module, configured to start, upon a successful key verification, timing;
a start module, configured to control, upon monitoring a driver presence and acquiring a vehicle start instruction within a set valid duration of the successful key verification, the vehicle to start.

11. A vehicle, **characterized by** comprising a vehicle body and the method according to any one of claims 1 to 9.

12. An electronic device, **characterized by** comprising: a memory and a processor;
wherein the memory stores computer-executable instructions;
the processor executes the computer-executable instructions stored in the memory, causing the processor to perform the method according to any one of claims 1 to 9.

13. A computer-readable storage medium, **characterized in that** computer-executable instructions are stored in the computer-readable storage medium, and the computer-executable instructions, when executed, are configured to implement the method according to any one of claims 1 to 9.

14. A computer program product, **characterized by** comprising a computer program, wherein the computer program, when executed, implements the method according to any one of claims 1 to 9.

15. A computer program, **characterized in that** when the computer program is executed on a computer, the computer performs the method according to any one of claims 1 to 9.
